(19) Europäisches Patentamt

European Patent Office

Office européen des brevets

(11) **EP 1 351 258 B1**

(12) **EUROPÄISCHE PATENTSCHRIFT**

(45) Veröffentlichungstag und Bekanntmachung des Hinweises auf die Patenterteilung:
**16.11.2005 Patentblatt 2005/46**

(51) Int Cl.$^7$: **G21K 1/06**, G02B 5/08

(21) Anmeldenummer: **03400006.7**

(22) Anmeldetag: **03.03.2003**

(54) **Methode zur Auswahl der Schichtdicken eines reflektierenden Elements für elektromagnetische Strahlung im extremen ultravioletten Bereich**

Method of selecting layer thicknesses of a reflective element for extreme ultra violet radiation

Méthode de sélection des épaisseurs des couches d'un élément réflectif à rayonnement ultra-violet extrême

(84) Benannte Vertragsstaaten:
**AT BE BG CH CY CZ DE DK EE ES FI FR GB GR HU IE IT LI LU MC NL PT RO SE SI SK TR**

(30) Priorität: **04.03.2002 DE 10210422**
**03.05.2002 DE 10221116**

(43) Veröffentlichungstag der Anmeldung:
**08.10.2003 Patentblatt 2003/41**

(73) Patentinhaber: **Fraunhofer-Gesellschaft zur Förderung der angewandten Forschung e.V. 80686 München (DE)**

(72) Erfinder:
• **Braun, Stefan**
**01309 Dresden (DE)**
• **Mai, Hermann**
**01067 Dresden (DE)**

(74) Vertreter: **Pfenning, Meinig & Partner GbR Gostritzer Strasse 61-63 01217 Dresden (DE)**

(56) Entgegenhaltungen:
**EP-A- 1 065 568      US-A- 5 086 443**
**US-A- 5 307 395      US-B1- 6 295 164**

• **TAKENAKA H ET AL: "DESIGN AND FABRICATION OF HIGHLY HEAT-RESISTANT MO/SI MULTILAYER SOFT X-RAY MIRRORS WITH INTERLEAVED BARRIER LAYERS" JOURNAL OF SYNCHROTRON RADIATION, XX, XX, Bd. 5, Nr. PART 3, 4. August 1997 (1997-08-04), Seiten 708-710, XP008007468 ISSN: 0909-0495**
• **BAJT S ET AL: "IMPROVED REFLECTANCE AND STABILITY OF MO/SI MULTILAYERS" PROCEEDINGS OF THE SPIE, SPIE, BELLINGHAM, VA, US, Bd. 4506, 31. Juli 2001 (2001-07-31), Seiten 65-75, XP008017154**

**Beschreibung**

Die Erfindung betrifft eine Methode zur Auswahl optischer Schichtdicken für ein optisches System mit einer Strahlungsquelle für elektromagnetische Strahlung und mindestens einem reflektierenden Element nach dem Oberbegriff des Anspruchs 1, sie kann besonders vorteilhaft für lithographische Anwendungen bei der Herstellung von Halbleiterbauelementen eingesetzt werden.

In der jüngsten Vergangenheit führte die weitere Miniaturisierung in der Halbleitertechnik bis in den Nanometerbereich dazu, dass elektromagnetische Strahlung im extremen ultravioletten Bereich, auch als weiche Röntgenstrahlung bezeichnet, zur Belichtung von integrierten Schaltkreisen eingesetzt werden soll.

Dabei wird die elektromagnetische Strahlung im entsprechend geeigneten Wellenlängenbereich zwischen 10 und 15 nm auf reflektierende Elemente gerichtet und in der Regel mit diesen reflektierenden Elementen auf ein zu belichtendes Objekt fokussiert.

Bei diesen an sich bekannten reflektierenden Elementen werden Multischichtsysteme auf einem Substrat ausgebildet, wobei es sich um Wechselschichtsysteme handelt. Dabei werden alternierend Schichten aus Molybdän und Silizium auf dem Substrat als Schichtpaare ausgebildet. Diese chemischen Elemente wurden wegen ihrer für die elektromagnetische Strahlung günstigen optischen Eigenschaften ausgewählt.

Es hat sich aber herausgestellt, dass es in den Grenzflächenbereichen zwischen dem Molybdän und dem Silizium zu einer diffusionsbedingten Silizidbildung kommt und dadurch keine scharfe Grenzfläche für die elektromagnetische Strahlung, was insbesondere den Brechungsindex betrifft, erreicht werden kann. Dieser Mischbereich mit den Siliziden weist zwischen den reinen Molybdän- und den Siliziumschichten Dicken im Bereich zwischen 0,7 und 1,5 nm auf. Dabei hängt die jeweilige Dicke dieser Silizidmischzone auch davon ab, in welcher Reihenfolge die Schichtbildung erfolgt ist. Sie ist in der Regel bei auf Molybdän ausgebildeten Siliziumschichten kleiner als bei Molybdän auf Silizium ausgebildeter Schicht.

Die Multischichtsysteme werden üblicherweise durch Einsatz von Magnetronsputtern, Elektronstrahlverdampfung oder durch gepulste Laserabscheidung hergestellt.

Des weiteren ist es bekannt, zur Verbesserung der thermischen Eigenschaften eines solchen Multischichtsystems und auch zur Verringerung der Silizidbildung in den Grenzflächenbereichen Zwischenschichten einzusetzen. Hierzu werden chemische Elemente und Verbindungen, wie $B_4C$ oder C, die für die elektromagnetische Strahlung weitestgehend transparent sind, eingesetzt.

Trotz aller Bemühungen und Optimierungsversuche sind den mittels eines solchen reflektierenden Elementes erreichbaren maximalen Reflektivitäten Grenzen gesetzt, wobei bisher die Obergrenze unterhalb 70% an reflektierter Strahlung liegt.

So sind aus EP 1065568A2 die Herstellung und optische Elemente an sich bekannt, bei denen Multischichtsysteme zu einer Erhöhung der Reflektivität von EUV-Strahlung eingesetzt werden sollen. Hierbei sollen Wechselschichtsysteme aus Elementen oder chemischen Verbindungen mit jeweils unterschiedlichen entsprechenden optischen Brechzahlen in Verbindung mit zusätzlichen Zwischen- oder Deckschichten solche Multischichtsysteme bilden.

Von S. Bajt u. a. wurde "Improved reflectance and stability of Mo/Si multilayers"; proceedings of the SPIE; Bellingham; US (31. Juli 2001); 4506, Seiten 65 bis 75 auf die Einflüsse von Grenzflächen zwischen Mo- und Si-Schichten, insbesondere durch Silizidbildung hingewiesen. Dabei wurde auf den die Reflektivität verhindernde Einfluss mit Hilfe von Zwischenschichten, die zwischen den Mo- und Si-Schichten ausgebildet werden sollen, hingewiesen.

Aus US 5,307,395 sind optische reflektierende Elemente bekannt, bei denen ein Schichtsystem aus Abstandsschichten und Knotenschichten ausgebildet worden sind. Dabei sollen die Knoten einer stehenden elektrischen Welle in der Mitte jeder dieser Knotenschichten positioniert sein.

Es ist daher Aufgabe der Erfindung, eine Methode für die Auswahl optischer Schichtdicken für ein optisches System, bei dem eine Strahlungsquelle für elektromagnetische Strahlung im Wellenlängenbereich des extremen ultravioletten Lichtes in Verbindung mit mindestens einem reflektierenden Element eingesetzt wird, zur Verfügung zu stellen, das bezüglich des Fertigungsaufwandes, der Herstellungskosten bzw. auch der erreichbaren maximalen Reflektivität günstiger ist.

Erfindungsgemäß wird diese Aufgabe mit einer Methode, die die Merkmale des Anspruchs 1 aufweist, gelöst. Vorteilhafte Ausgestaltungsformen und Weiterbildungen der Erfindung können mit den in den untergeordneten Ansprüchen bezeichneten Merkmalen erreicht werden.

Das erfindungsgemäß ausgebildete optische System verwendet eine Strahlungsquelle für elektromagnetische Strahlung im extremen ultravioletten Bereich, also unterhalb 15 nm.

Die elektromagnetische Strahlung dieser Strahlungsquelle wird auf ein reflektierendes Element gerichtet. Das reflektierende Element weist ein auf einem Substrat ausgebildetes Multischichtsystem auf. Dabei können für das Substrat Silizium, Saphir, Cerodur aber auch Gläser mit sehr kleiner Wärmeausdehnung, die üblicherweise als ULE (Ultra Low Expansion) bezeichnet werden, eingesetzt werden.

Das Multischichtsystem ist, wie aus dem Stand der Technik an sich bekannt, aus Schichtpaaren, die alternierend angeordnet sind und jeweils aus Molybdän und Silizium bestehen, gebildet.

Bei dem erfindungsgemäß auszubildenden optischen System wird die elektromagnetische Strahlung unter einem Winkel auf die Oberfläche des Multischichtsystem gerichtet, bei dem für die Wellenlänge der von der Strahlungsquelle ausgehenden elektromagnetischen Strahlung, der Dicke d der das Multischichtsystem bildenden Schichtpaare die Braggsche Gleichung

$$\lambda = 2d \sin \Theta \sqrt{1 - \frac{2\bar{\delta}^2}{\sin^2 \Theta}}$$

dabei sind

$\lambda$ -        Wellenlänge des Röntgenstrahls

d -        Periodendicke der Schichtpaare ($= d_{Mo}+ dsi$)

e -        Winkel, unter dem der Spiegel reflektiert

$\bar{\delta}$ -        Dispersionskorrektur (Brechungsindex $\bar{n}=1\text{-}\bar{\delta}$)

erfüllt ist.

Dadurch tritt zumindest innerhalb des Multischichtsystems ein stehendes elektrisches Wellenfeld auf. Erfindungsgemäß werden dabei die Dicken der Molybdän-und der Siliziumschichten $d_{Mo}$ und $d_{si}$ so gewählt, dass die Knoten des elektrischen Wellenfeldes jeweils unmittelbar an Grenzflächen zwischen solchen Einzelschichten angeordnet sind, so dass an diesen Grenzflächen nahezu keine Verluste infolge von Absorption auftreten können.

Alternativ oder zusätzlich können die Schichtdicken $d_{Mo}$ und $d_{si}$ der Einzelschichten solcher Schichtpaare so ausgewählt werden, dass die Wellenbäuche des stehenden Wellenfeldes vor oder nachfolgend an Grenzflächen angeordnet sind.

Dadurch kann unter Ausnutzung der Eigenschaften eines stehenden elektrischen Wellenfeldes der negative Einfluss der Silizidbildung in Mischzonen an den Grenzflächen zwischen Molybdän und Silizium bereits ohne Zwischenschichten verringert werden.

Die Dicken der Molybdänschichten $d_{Mo}$ und die Dicken der Siliziumschichten sollten dabei zumindest annähernd im Verhältnis 2/3 liegen.

Es besteht aber selbstverständlich auch die Möglichkeit, Zwischenschichten einzusetzen, die dann die Grenzflächen zwischen den Molybdän- und den Siliziumschichten bilden.

Solche Zwischenschichten können Dicken im Bereich zwischen 0,1 und 3 nm aufweisen, wobei insbesondere die Eigenschaft für solche für Zwischenschichten verwendeten chemischen Elemente bzw. Verbindungen zur Verhinderung bzw. Behinderung der unerwünschten Silizidbildung gefordert ist.

Dies betrifft insbesondere die Grenzflächen, an denen die Knoten des stehenden Wellenfeldes angeordnet sind, da dort in einem reinen Molybdän-Silizium Multischichtsystem die größeren Interdiffusionszonen (Silizid) entstehen und das Einfügen von Zwischenschichten günstiger ist.

Aufgrund des Knotens des stehenden Wellenfeldes kann eine Zwischenschicht aus einem chemischen Element oder einer chemischen Verbindung eingesetzt werden, die nicht zwingend für die jeweilige elektromagnetische Strahlung transparent sein muss. Insbesondere bezüglich der letztgenannten Eigenschaften eines solchen chemischen Elementes oder chemischen Verbindung, besteht die Möglichkeit der Auswahl eines Elementes bzw. einer Verbindung, die die Silizidbildung auch bei sehr kleinen Zwischenschichtdicken nahezu bzw. nahezu vollständig verhindern kann.

Hierzu sind beispielsweise Ir, Pt, Os, Pd, B, Li, Ti, Si, C, Al sowie chemische Verbindungen dieser Elemente geeignet. Beispiele für chemische Verbindungen sind BN, TiN, $Al_2O_3$, SiC, $Si_3N$ bzw. LiF.

Der Verzicht auf Zwischenschichten, die Grenzflächen bilden können, bietet sich insbesondere an Grenzflächen, bei denen Siliziumschichten auf Molybdänschichten ausgebildet worden sind, an. Insbesondere wenn die Molybdänschichten im nano bzw. polykristallinen Zustand vorliegen und eine geringere Interdiffusion (Silizidbildung) an den Grenzflächen, bei denen Siliziumschichten auf Molybdänschichten ausgebildet sind, auftritt.

Selbstverständlich können aber auch die Zwischenschichten aus den an sich hierfür bekannten Elementen Kohlenstoff, Ruthenium, Wolfram oder auch Borcarbid eingesetzt werden, wobei selbstverständlich auch Kombinationen solcher verschiedenen Zwischenschichten sowie weitere Verbindungen dieser Elemente für Zwischenschichten eingesetzt werden können.

Zwischenschichten, die Grenzflächen bei den Wellenbäuchen des stehenden Wellenfeldes bilden, sollten eine kleinere Dicke aufweisen, als gegebenenfalls Zwischenschichten die an Knoten des Wellenfeldes angeordnet sind.

Zwischenschichten in der Nähe von Wellenbäuchen sollten aus einem für die jeweilige elektromagnetische Strahlung transparenten Element oder einer solchen Verbindung gebildet sein, wobei eine schwache Absorption zugelassen wird und eine 100 %-ige Transparenz nicht unbedingt erforderlich ist.

Ein auf einem reflektierenden Element ausgebildetes Multischichtsystem sollte mit mindestens zehn aus Molybdän- und Siliziumschichten bestehenden Schichtpaaren gebildet sein, wobei die Anzahl der für das Multischichtsystem eingesetzten Schichtpaare auch bis hin zu 60 oder mehr solcher Paare reichen kann.

Insbesondere für den Einsatz in der Lithographie sollte das reflektierende Element eine gewölbte Oberfläche (sphärisch, asphärisch) aufweisen, so dass die elektromagnetische Strahlung entsprechend fokussiert und/oder eine Strahlformung erreicht werden kann.

Mit der Erfindung kann eine Reflektivität, die oberhalb 70% der von der Strahlungsquelle bei der jeweiligen abgestrahlten elektromagnetischen Strahlung liegt, erreicht werden.

Nachfolgend soll der mit der Erfindung erreichbare Effekt anschaulich gemacht werden.

Dabei zeigt:

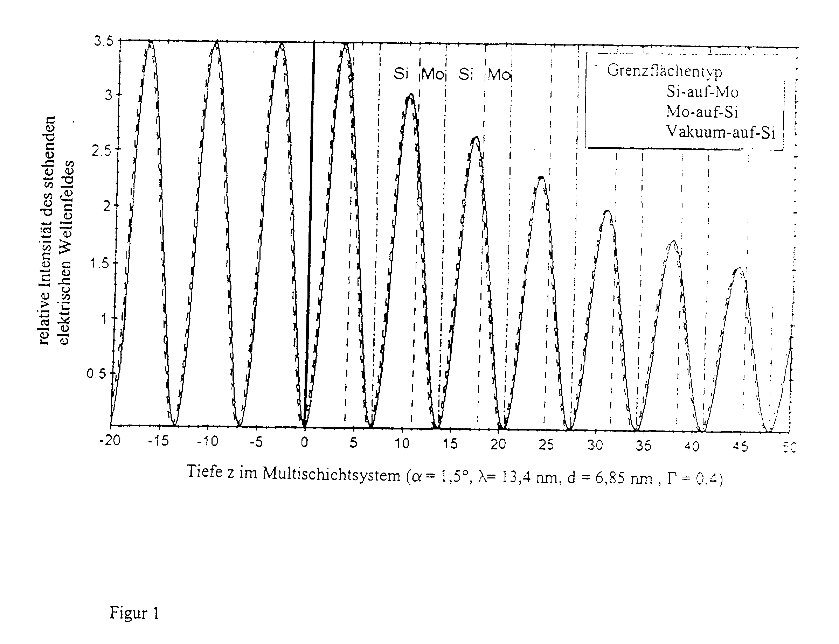

Figur 1    ein Diagramm der Intensität eines stehenden elektrischen Wellenfeldes innerhalb eines Vakuums und innerhalb eines aus Siliziumschichten und Molybdänschichten gebildeten Multischichtsystems.

In Figur 1 ist ein Diagramm der Intensitäten eines stehenden elektrischen Wellenfeldes außerhalb und innerhalb eines Multischichtsystems, bestehend aus Schichtpaaren von Silizium- und Molybdänschichten dargestellt. Dabei wurde elektromagnetische Strahlung mit einer Wellenlänge von 13,4 nm eingesetzt, die unter einem Winkel $\alpha = 1,5°$ auf die Oberfläche des Multischichtsystems gerichtet wurde.

Die Dicke d (Periodendicke) der Schichtpaare betrug 6,85 nm, wobei $d = d_{Mo} + d_{si}$ ist.

Im in Figur 1 gezeigten Diagramm soll die dikke durchgezogene Linie bei 0 die Oberfläche des Multischichtsystems, auf die die elektromagnetische Strahlung mit dem Winkel $\alpha$ gerichtet ist, kennzeichnen.

Die Grenzflächen, bei denen eine Silizium- auf eine Molybdänschicht abgeschieden wurden, sind gestrichelt und die Grenzflächen, bei denen eine Molybdänschicht auf eine Siliziumschicht abgeschieden worden sind, mit einer Strich-Punkt-Linie dargestellt.

Aus dem Diagramm wird deutlich, dass die einzelnen Schichtdicken, der das Multischichtsystem bildenden Einzelschichten so gewählt wurden, dass jeder Knoten des stehenden elektrischen Wellenfeldes an einer Grenzfläche angeordnet ist, wobei bei diesem Beispiel die Knoten generell an Grenzflächen, bei denen eine Molybdänschicht auf einer Siliziumschicht ausgebildet worden ist, angeordnet sind.

Des weiteren wird mit dem Diagramm deutlich, dass die Wellenbäuche des stehenden elektrischen Wellenfeldes generell in einem Abstand von Grenzflächen und hier vor solchen Grenzflächen, ausgehend von der Oberfläche des Multischichtsystems angeordnet sind. Bei dem hier gezeigten Beispiel sind die Wellenbäuche immer vor einer Grenzfläche einer auf einer Molybdänschicht ausgebildeten Siliziumschicht angeordnet.

**Patentansprüche**

**1.** Methode zur Auswahl von optischen Schichtdicken für ein optisches System mit einer Strahlungsquelle für elektromagnetische Strahlung im Wellenlängenbereich zwischen 10 und 15 nm und mindestens einem reflektierenden Element, bei dem auf einem Substrat ein Multischichtsystem mit alternierend angeordneten Schichten aus Mo und Si, als Schichtpaare, ausgebildet werden, wobei die elektromagnetische Strahlung unter einem Winkel auf die Oberfläche des Multischichtsystems gerichtet ist und die Dicke d der Schichtpaare bei der Wellenlänge der elektromagnetischen Strahlung die Braggsche Gleichung erfüllen und zumindest innerhalb des Multischichtsystems ein stehendes elektrisches Wellenfeld auftritt, **dadurch gekennzeichnet, dass** die Dicken $d_{Mo}$ und $d_{Si}$ der Mo- und Si-Schichten so gewählt werden, dass die Knoten des elektrischen Wellenfeldes jeweils unmittelbar an Grenzflächen zwischen solchen Einzelschichten und die Wellenbäuche vor oder nach solchen Grenzflächen angeordnet sind.

**2.** Methode nach Anspruch 1, **dadurch gekennzeichnet, dass** die Grenzflächen durch Zwischenschichten gebildet werden, die zwischen auf Siliziumschichten ausgebildeten Molybdänschichten und/oder zwischen auf Molybdänschichten ausgebildeten Siliziumschichten angeordnet sind.

**3.** Methode nach Anspruch 1 oder 2, **dadurch gekennzeichnet, dass** die Zwischenschichten eine Dicke im Bereich zwischen 0,1 und 3 nm aufweisen.

**4.** Methode nach mindestens einem der vorhergehenden Ansprüche, **dadurch gekennzeichnet, dass** die Zwischenschichten aus eine Silizidbildung verhindernden bzw. behindernden chemischen Elementen oder Verbindungen gebildet werden.

**5.** Methode nach mindestens einem der vorhergehenden Ansprüche, **dadurch gekennzeichnet, dass** Zwischenschichten bei Wellenbäuchen des stehenden Wellenfeldes eine kleinere Dicke, als Zwischenschichten bei Knoten, aufweisen sollen.

**6.** Methode nach mindestens einem der vorhergehenden Ansprüche, **dadurch gekennzeichnet, dass** zumindest die Zwischenschichten in der Nähe von Wellenbäuchen aus einem für die jeweilige elektromagnetische Strahlung transparenten Element oder Verbindung gebildet werden.

**7.** Methode nach mindestens einem der vorhergehenden Ansprüche, **dadurch gekennzeichnet, dass** die Knoten des stehenden Wellenfeldes an Grenzflächen, bei denen Mo auf Si ausgebildet worden ist, angeordnet sein sollen.

**8.** Methode nach Anspruch 7, **dadurch gekennzeich-**

**net, dass** die Grenzflächen, bei denen Mo auf Si abgeschieden worden ist, keine Zwischenschicht aufweisen sollen.

9.  Methode nach mindestens einem der vorhergehenden Ansprüche, **dadurch gekennzeichnet, dass** die Zwischenschichten an Knoten des stehenden Wellenfeldes für die jeweilige elektromagnetische Strahlung nicht transparent sind.

10. Methode nach mindestens einem der vorhergehenden Ansprüche, **dadurch gekennzeichnet, dass** Zwischenschichten aus $B_4C$, C, Ru, W und/oder Ag gebildet werden.

11. Methode nach mindestens einem der vorhergehenden Ansprüche, **dadurch gekennzeichnet, dass** das Multischichtsystem mit mindestens zehn aus Mo- und Si-Schichten bestehenden Schichtpaaren gebildet wird.

12. Methode nach mindestens einem der vorhergehenden Ansprüche, **dadurch gekennzeichnet, dass** das reflektierende Element zur Fokussierung und/oder Strahlformung der elektromagnetischen Strahlung eine gewölbte Oberfläche aufweisen soll.

**Claims**

1.  Method of selecting optical layer thicknesses for an optical system with a radiation source for electromagnetic radiation in the wavelength range of between 10 and 15 nm and at least one reflective element, in the case of which a multilayer system with layers of Mo and Si arranged alternately, as layer pairs, are formed on a substrate, the electromagnetic radiation being directed at an angle onto the surface of the multilayer system and the thickness d of the layer pairs, at the wavelength of the electromagnetic radiation, satisfying the Bragg equation and a standing electric wave field occurring at least within the multilayer system, **characterized in that** the thicknesses $d_{Mo}$ and $d_{Si}$ of the Mo and Si layers are chosen such that the nodes of the electric wave field are arranged in each case directly at interfaces between such individual layers and the antinodes are arranged before or after such interfaces.

2.  Method according to Claim 1, **characterized in that** the interfaces are formed by intermediate layers which are arranged between molybdenum layers formed on silicon layers and/or between silicon layers formed on molybdenum layers.

3.  Method according to Claim 1 or 2, **characterized in that** the intermediate layers have a thickness in the range of between 0.1 and 3 nm.

4.  Method according to at least one of the preceding claims, **characterized in that** the intermediate layers are formed from chemical elements or compounds that prevent or impede siliciding.

5.  Method according to at least one of the preceding claims, **characterized in that** intermediate layers at antinodes of the standing wave field are intended to have a smaller thickness than intermediate layers at nodes.

6.  Method according to at least one of the preceding claims, **characterized in that** at least the intermediate layers in the vicinity of antinodes are formed from an element or compound that is transparent to the respective electromagnetic radiation.

7.  Method according to at least one of the preceding claims, **characterized in that** the nodes of the standing wave field are intended to be arranged at interfaces at which Mo was formed on Si.

8.  Method according to Claim 7, **characterized in that** the interfaces at which Mo was deposited on Si are intended to have no intermediate layer.

9.  Method according to at least one of the preceding claims, **characterized in that** the intermediate layers at nodes of the standing wave field are not transparent to the respective electromagnetic radiation.

10. Method according to at least one of the preceding claims, **characterized in that** intermediate layers are formed from $B_4C$, C, Ru, W and/or Ag.

11. Method according to at least one of the preceding claims, **characterized in that** the multilayer system is formed with at least ten layer pairs comprising Mo and Si layers.

12. Method according to at least one of the preceding claims, **characterized in that** the reflective element is intended to have a curved surface for focusing and/or beam shaping of the electromagnetic radiation.

**Revendications**

1.  Procédé de sélection d'épaisseurs de couches optiques pour un système optique, comprenant une source de rayonnement électromagnétique dans la plage de longueurs d'onde comprise entre 10 et 15 nm et au moins un élément réfléchissant, dans lequel est formé, sur un substrat, un système de couches multiples avec des couches de Mo et Si agencées en alternance sous la forme de paires de couches, dans lequel le rayonnement électromagnétique est dirigé sous un certain angle sur la surface du système de couches multiples et l'épaisseur d des paires de couches à la longueur d'onde du rayonnement électromagnétique satisfait à l'équation de Bragg et dans lequel un champ d'ondes électriques stationnaires apparaît au moins à l'intérieur du système de couches multiples, **caractérisé en ce que** les épaisseurs $d_{Mo}$ et $d_{Si}$ des couches de Mo et Si sont choisies de sorte que les noeuds du champ d'ondes électriques soient agencés respectivement directement sur des interfaces entre ces couches individuelles et les ventres d'onde devant ou après ces interfaces.

2. Procédé selon la revendication 1, **caractérisé en ce que** les interfaces sont formées de couches intermédiaires qui sont agencées entre des couches de molybdène formées sur des couches de silicium et/ou entre des couches de silicium formées sur des couches de molybdène.

3. Procédé selon la revendication 1 ou 2, **caractérisé en ce que** les couches intermédiaires présentent une épaisseur dans la plage entre 0,1 et 3 nm.

4. Procédé selon au moins l'une quelconque des revendications précédentes, **caractérisé en ce que** les couches intermédiaires sont formées d'éléments ou de composés chimiques empêchant ou gênant une formation de siliciure.

5. Procédé selon au moins l'une quelconque des revendications précédentes, **caractérisé en ce que** les couches intermédiaires doivent présenter, au niveau des ventres d'ondes du champ d'ondes stationnaires, une épaisseur plus petite que les couches intermédiaires au niveau des noeuds.

6. Procédé selon au moins l'une quelconque des revendications précédentes, **caractérisé en ce qu'**au moins les couches intermédiaires voisines des ventres d'ondes sont formées d'un élément ou d'un composé transparent pour le rayonnement électromagnétique respectif.

7. Procédé selon au moins l'une quelconque des revendications précédentes, **caractérisé en ce que** les noeuds du champ d'ondes stationnaires doivent être agencés sur les interfaces où Mo est formé sur Si.

8. Procédé selon la revendication 7, **caractérisé en ce que** les interfaces, où Mo est déposé sur Si, ne doivent pas présenter de couche intermédiaire.

9. Procédé selon au moins l'une quelconque des revendications précédentes, **caractérisé en ce que** les couches intermédiaires au niveau des noeuds du champ d'ondes stationnaires ne sont pas transparentes pour le rayonnement électromagnétique respectif.

10. Procédé selon au moins l'une quelconque des revendications précédentes, **caractérisé en ce que** des couches intermédiaires sont formées de $B_4C$, C, Ru, W et/ou Ag.

11. Procédé selon au moins l'une quelconque des revendications précédentes, **caractérisé en ce que** le système de couches multiples est formé d'au moins dix paires de couches constituées de couches de Mo et Si.

12. Procédé selon au moins l'une quelconque des revendications précédentes, **caractérisé en ce que** l'élément réfléchissant doit présenter une surface bombée pour la focalisation et/ou la formation du rayonnement électromagnétique.

Figur 1

EP 1 351 258 B1